# EUROPÄISCHE PATENTSCHRIFT

(11) **EP 0 319 875 B1**
(45) Veröffentlichungstag und Bekanntmachung des Hinweises auf die Patenterteilung: **07.04.1993**
(21) Anmeldenummer: 88120220.4
(22) Anmeldetag: 03.12.1988
(51) Int. Cl.: B65G 47/68

(54) **Vorrichtung zur Zusammenführung eines Behälterstromes zu einer geschlossenen Behälterreihe**
Device for joining a stream of containers to a closed row
Dispositif pour réunir un courant de récipients à une suite serrée

(30) Priorität: 05.12.1987 DE 3741249
(43) Veröffentlichungstag der Anmeldung: 14.06.1989
(73) Patentinhaber: Rexing, Günter, D-45307 Essen (DE)
(72) Erfinder: Rexing, Günter, D-45307 Essen (DE)
(74) Vertreter: Spalthoff, Adolf, Dipl.-Ing.

(56) Entgegenhaltungen:
- DE-C- 3 500 660
- DE-U- 1 888 982
- US-A- 2 753 975
- US-A- 3 357 536
- US-A- 3 490 574

## Beschreibung

Die Erfindung betrifft eine Vorrichtung zur Zusammenführung von in einem breiten Strom auf einem oder mehreren, ein- oder mehrspurigen, endlos umlaufenden Förderern langsam ankommenden Behältern nach dem Oberbegriff des Patentanspruchs 1.

Derartige Behälterzusammenführungen sind bekannt, speziell in Form von Flaschenzusammenführungen, beispielsweise durch die DE-PS 35 00 660. Die Vereinzelung der in einem breiten Strom ankommenden Behältern geschieht in der Weise, daß diese durch die auf sie einwirkenden Fliehkräfte an die Führung gedrückt und an dieser entlang gefördert werden, bis sich eine drucklose, geschlossene Reihe von Behältern ergibt. Als nachteilig hat sich bei den bekannten Zusammenführungen herausgestellt, daß sog. stumpfe Flaschen, solche mit einem Reibring oder solche mit einer kleinen Berührungslinie, dazu neigen, sich auf dem Förderer unter Anlage an der Führung in Drehbewegung geraten können, wobei eine parallellaufende Flasche bei Berührung in entgegengesetzte Drehung oder in Anlage kommt, so daß im Endkeil der Zwangszusammenführung eine Verklemmung entsteht. Die nachfolgenden Behälter treffen auf diese Blockierung, welche sich durch leichte Crasheinwirkung wieder auflösen kann, aber dabei kurzfristig Lücken zieht, oder es kommt zur Totalblockierung mit Notabschaltung, so daß Betriebsunterbrechungen unausbleiblich sind.

Aus der US-A-2 753 975 ist eine Vorrichtung zur Zusammenführung von in einem breiten Strom auf einem oder mehreren ein- oder mehrspurigen, endlos umlaufenden Förderern langsam ankommenden Behältern bekannt, bei der zwei Förderer vorgesehen sind, auf denen Behälter zum Einlaufbereich eines Abförderers transportiert werden. Zur Überführung der Behälter von den Eingangsförderern auf den Abgangsförderer ist eine zweiteilige Führung vorgesehen, deren jedes Teil sich quer über einen der beiden Eingangsförderer und längs jeweils einer Seite des Eingangsbereichs des Abgangsförderers erstreckt. Demgemäß ist im Falle der bekannten Vorrichtung der Eingangsbereich des Abgangsförderers jeweils mit einer Führung versehen. Sofern ein Behälter vom ersten Eingangsförderer am Anfang des Eingangsbereichs des Abgangsförderers ungünstig neben einem vom zweiten Eingangsförderer antransportierten Behälter gerät, laufen die beiden genannten Behälter zusammen in den Eingangsbereich des Abförderers ein. Dann wird auf die beidseits des Eingangsbereichs des Abförderers vorgesehenen Führungen ein Druck ausgeübt, der dazu führt, daß die genannten Führungen gegen die Kraft von Federn ausgelenkt werden. Um in jedem Fall zu verhindern, daß, was bei ungünstigen Umständen möglich wäre, Stopper bzw. Verklemmungen der Behälter auftreten, ist im Falle der bekannten Vorrichtung eine Antireibeinrichtung vorgesehen, die zumindest aus einem Antireibrad besteht, dessen Welle bzw. Achse sich in fester räumlicher Zuordnung zu der auf seiner Seite des Eingangsbereichs des Abgangsförderers vorgesehenen Führung befindet. Werden nun die beiden Teile der Führung durch zwei nebeneinander in den Einlaufbereich des Abgangsförderers einlaufende Behälter auseinandergedrückt und kommt das Behälterpaar an die mit der Antireibeinrichtung versehene Stelle, so gerät derjenige Behälter, der sich an der die Antireibeinrichtung aufweisenden Führung des Einlaufbereichs befindet, in Anlage an die Antireibrolle. Hierdurch wird die Gleitreibung zwischen dem betreffenden Behälter und der auf der betreffenden Seite des Einlaufbereichs vorhandenen Führung aufgehoben; anstelle der Gleitreibung tritt die Haftreibung zwischen dem Behälter und der Antireibrolle, die nunmehr in Drehung versetzt wird und dadurch den betreffenden Behälter beschleunigt. Der auf der anderen Seite des Einlaufbereichs befindliche Behälter unterliegt zumindest zu Beginn des Beschleunigungsvorgangs des anderen Behälters durch die Aufhebung der Gleitreibung zwischen diesem und der ihm zugeordneten Führung noch der aufgrund des Druckes auftretenden Gleitreibung an der ihm zugeordneten Führung. Auch wenn bei einem Ausführungsbeispiel der Vorrichtung gemäß US 27 53 975 zwei derartige Antireibeinrichtungen vorgesehen sind, d.h. an jedem Teil der Führung ist jeweils eine Antireibeinrichtung vorgesehen, dient die entsprechende Antireibrolle einer jeden Antireibeinrichtung jeweils zur Beschleunigung des mit ihr in Berührung tretenden Behälters.

Da im Falle der bekannten Vorrichtung der Einlaufbereich des Abgangsförderers immer beidseitig mit einem Teil der Führung versehen ist, wobei die beiden Teile der Führung sich in Förderrichtung aneinander annähern und die angeförderten Behälter auf eine Reihe ausrichten, tritt bei jedem gemeinsamen Eintreffen zweier Flaschen am Anfang des Einlaufbereichs ein Auseinanderdrücken der beiden Teile der Führung und damit Gleitreibung zwischen den Behältern und der Führung auf, bis einer oder beide Behälter in Anlage an die Antireibrolle bzw. die Antireibrollen geraten. Bei entsprechendem Flaschenanfall auf den Eingangsförderern ist nicht auszuschließen, daß es zu Verklemmungen in erheblichem Ausmaß im Eingangsbereich kommt.

Der Erfindung liegt die Aufgabe zugrunde, die vorstehend geschilderte gattungsgemäße Vorrichtung zur Zusammenführung von in einem breiten Strom ankommenden Behältern derart weiterzubilden, daß die Gefahr von Verklemmungen am Übergang zum die Behälter in einer schnell ablaufenden, drucklosen, geschlossenen Reihe abfördernden Förderer vermindert ist.

Diese Aufgabe wird erfindungsgemäß durch die Merkmale im kennzeichnenden Teil des Patentanspruchs 1 gelöst. Dadurch, daß am Einlaufbereich des die Behälter abtransportierenden Förderers lediglich eine einseitige Führung vorgesehen ist, sind Verklemmungen von Behältern an der Führung ausgeschlossen. Das Einlaufen von zwei nebeneinander angeordneten Behältern auf den Förderer wird dadurch verhindert, daß auf derjenigen Seite des Einlaufbereichs, die führungsfrei ausgebildet ist, zumindest eine Rolle vorgesehen ist, die mit einem Behälter, der aus der an der Führung laufenden, weitgehend geschlossenen Reihe vorsteht, in Anlage gerät und einen Weitertransport des vorstehenden Behälters verhindert. Die Federbeaufschlagung der Rolle in Richtung auf die ihr gegenüberliegende Führung bewirkt, daß der vorstehende Behälter, sobald in der entlang der Führung vorbeilaufenden Reihe eine Lücke ist, in diese Lücke hineingedrückt wird.

Vorteilhaft ist die Rolle an dem einen Ende eines Haltearmes drehbar gelagert, dessen anderes Ende im Rahmen, Gehäuse od.dgl. der Vorrichtung an deren der Führung gegenüberliegenden Seite derselben angeordnet ist. Es ist auch möglich, die Rolle in einem Haltearm in dessen Längsrichtung verschiebbar anzubringen.

Die Rolle und/oder deren Haltearm steht bzw. stehen derart unter der Einwirkung einer Feder, daß diese ihre frei vorragende Normallage einnimmt und sich in dieser mit ihrer äußeren Umfläche unter Belassung eines Zwischenraumes kleiner als der Durchmesser der Behälter bis vor den Bereich der äußeren Umflächen der in eine Reihe zu vereinzelnden Behälter erstreckt. Der Abstand der äußeren Umfläche der Rolle ist zu der Führung einstellbar, so daß eine leichte und schnelle Anpassung an die verschiedensten Flaschenarten und -größen möglich ist.

Als Rolle findet vorzugsweise eine Schwamm- oder Bürstenrolle Verwendung, deren nachgiebige, stumpfe Oberfläche eine leichte Bremswirkung auf die etwa vorstehenden, sich mitdrehenden oder parallellaufenden Behälter ausübt.

Vorzugsweise sind drei Rollen vorgesehen, wobei diese bei Vorhandensein mehrerer Rollen in Förderrichtung gesehen hintereinander angebracht sind.

Ausführungsbeispiele der Erfindung sind an Hand der Zeichnung näher erläutert, und zwar zeigt:
- Figur 1: die Draufsicht einer ersten Ausführungsform einer Flaschenzusammenführung,
- Figur 2: eine geschnittene Seitenansicht gemäß der Linie II - II der Figur 1,
- Figur 3: einen Ausschnitt einer Draufsicht der Figur 1 im Bereich der Linie II - II,
- Figur 4: die Draufsicht einer zweiten Ausführungsform einer Flaschenzusammenführung und
- Figur 5: die Draufsicht einer dritten Ausführungsform einer Flaschenzusammenführung.

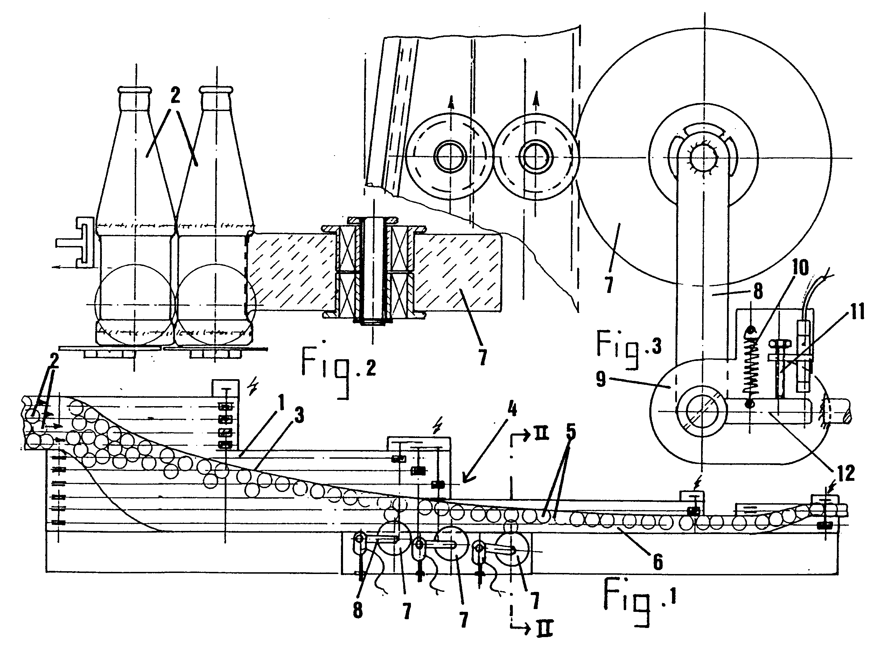

Bei dem Ausführungsbeispiel nach Figur 1 - Figur 3 ist mit 1 ein mehrspuriger Förderer, beispielsweise in Form einer Plattenkette, bezeichnet. Auf dem Förderer 1 wird ein breiter Strom von Behältern 2, z.B. in Form von Flaschen langsam herantransportiert. Diese laufen entlang einer einseitig angebrachten Führung 3, und zwar unter der Einwirkung der von dem Förderer 1 auf die Behälter 2 ausgeübten Fliehkraft, was zu einer Vereinzelung der Behälter 2 führt. Die Führung 3 erstreckt sich über den Förderer 1 zu dessen Transportrichtung schräg verlaufend hinweg, bis etwa in den Einlaufbereich 4 eines die geschlossene Reihe 5 von Behältern 2 abtransportierenden Förderers 6.

Im Einlaufbereich 4 des die geschlossene Reihe 5 von Behältern 2 abtransportierenden Förderers 6 ist die Vorrichtung mit drei Rollen 7 ausgerüstet. Die Rollen 7 sind derart federnd nachgiebig angebracht, daß deren äußere Umflächen in ihrer Normallage unter Belassung eines Zwischenraumes, kleiner als der Durchmesser der Behälter, bis vor die äußeren Umflächen der weitgehend geschlossenen Reihe von Behältern 2 frei vorragen. In Figur 1 nimmt die mittlere Rolle 7 ihre Normallage ein, während die in Förderrichtung gesehen vordere und hintere Rolle 7 aus der Normallage ausgelenkt sind.

Die Rollen 7 sind an den einen Enden von Haltearmen 8 drehbar gelagert, deren andere Enden an dem der Führung 3 gegenüberliegenden Seite der Vorrichtung schwenkbar angeordnet sind, beispielsweise in Lagerböcken 9. Die Haltearme 8 stehen unter der Einwirkung von Federn 10, gegen deren Federkraft die Rollen 7 bei Vorstehen zweier Flaschen 2 voreinander ausgelenkt werden.

Der Abstand der äußeren Umflächen der Rollen 7 zu der Führung 3 ist einstellbar, beispielsweise über die Stellschrauben 11 in Verwendung mit den mit den Haltearmen 8 verbundenen Hebeln 12.

Als Rollen 7 finden Schwamm- oder Bürstenrollen Verwendung, deren Oberflächen nachgiebig und in gewissem Maße stumpf sind, so daß diese eine Bremswirkung auf die Behälter 2 ausüben, falls deren Umflächen mit diesen in Berührung gelangen.

Die Wirkungsweise der erfindungsgemäßen Ausgestaltung ist wie folgt:
Wie aus Figur 1 ersichtlich, stehen vor der in Förderrichtung gesehen vorderen und hinteren Rolle 7 jeweils zwei Behälter 2 voreinander mit der Folge, daß die vorstehenden Behälter 2 von der evtl. Drehbewegung der an der Führung 3 anliegenden Behälter 2 mitgenommen und von diesen in entgegengesetzte Drehung versetzt werden oder aber im Parallellauf zu diesen weitertransportiert werden. Da die frei vorragende Normallage der Rollen 7 so eingestellt ist, daß diese sich zumindestens soweit an die an der Führung 3 anliegenden Behälter 2 erstreckt, daß kein zweiter Behälter mehr durch den Zwischenraum zwischen den an der Führung anliegenden Behältern 2 und den äußeren Umflächen der Rollen 7 hindurchgeht, führt das Voreinanderstehen zweier Behälter 2 zu einer Auslenkung der in diesem Bereich vorhandenen Rollen 7, im dargestellten Ausführungsbeispiel der vorderen und hinteren Rolle 7, mit der Folge, daß sich die vorstehenden Behälter 2 in die nachgiebigen Oberflächen der Rollen 7 hineindrücken und von diesen in ihrer Dreh- oder Parallelbewegung abgebremst werden. Dadurch gelangen die vorstehenden Behälter 2 aus diesen ihren dargestellten, vorstehenden Lagen und werden zwangsläufig in die vorhandenen Lücken gedrückt, und zwar zusätzlich unter der Einwirkung der auf die Haltearme einwirkenden Federn 10, welche diese in ihre frei vorragende Normallage zurückzubewegen versuchen.

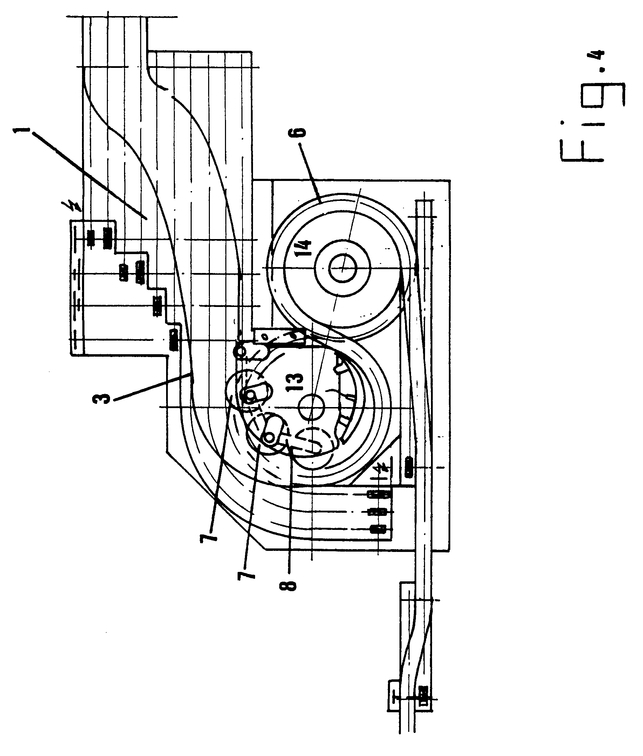

Bei dem Ausführungsbeispiel nach Figur 4 weist der Förderer 1 an seinem einen Endbereich eine Abbiegung um etwa 90 Grad auf. Die an der Führung 3 infolge der Fliehkraft entlanglaufenden und sich vereinzelnden Behälter 2 gelangen auf eine erste Scheibe 13, welche von dem die geschlossene Reihe abtransportierenden Förderer 6 umschlungen ist, welcher die nachgesetzte Scheibe 14 ebenfalls umschlingt. Die Anordnung der Rollen 7 ist die gleiche, wie zu dem Ausführungsbeispiel nach Figur 1 beschrieben.

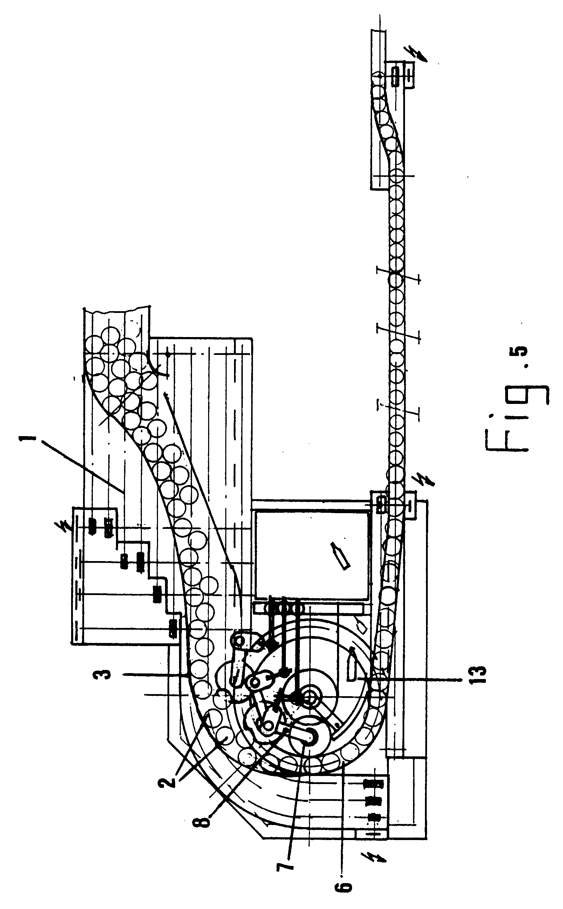

Im Ausführungsbeispiel nach Figur 5 ist der Förderer 1 im wesentlichen gleich ausgebildet wie der nach Figur 4, jedoch ist der die geschlossene Reihe von Behältern 2 abtransportierende Förderer 6 lediglich um eine erste, drehbare Scheibe 13 herumgeführt.

## Patentansprüche

1. Vorrichtung zur Zusammenführung von in einem breiten Strom auf einem oder mehreren, ein- oder mehrspurigen, endlos umlaufenden Förderern (1) langsam ankommenden Behältern (2), vorzugsweise Flaschen, Dosen od.dgl., entlang einer Führung (3) zu einer schnell ablaufenden, drucklosen, geschlossenen Reihe (5) von Behältern (2), wobei sich die Führung (3) über den bzw. die Förderer (1) hinweg zu dessen bzw. deren Transportrichtung schräg oder bogenförmig verlaufend bis in den Einlaufbereich (4) eines die geschlossene Reihe (5) von Behältern (2) abtransportierenden Förderers (6) erstreckt, dadurch gekennzeichnet, daß eine Seite des Einlaufbereichs (4) des die geschlossene Reihe (5) von Behältern (2) abtransportierenden Förderers (6) führungsfrei ist und daß an dieser führungsfreien Seite des Einlaufbereichs (4) zumindest eine Rolle (7), die eine Bremswirkung auf mit ihr in Anlage geratene Behälter (2) ausübt, derart federnd angebracht ist, daß deren äußere Umfläche in ihrer Normallage sich zumindest soweit an die an der Führung (3) anliegenden Behälter (2) erstreckt, daß kein zweiter Behälter (2) mehr durch den Zwischenraum zwischen den an der Führung anliegenden Behältern (2) und der äußeren Umfläche der Rolle (7) hindurchgeht.

2. Vorrichtung nach Anspruch 1, dadurch gekennzeichnet, daß die Rolle (7) an dem einen Ende eines Haltearmes (8) drehbar gelagert ist, dessen anderes Ende im Rahmen, Gehäuse od.dgl. der Vorrichtung an deren der Führung (3) gegenüberliegenden Seite derselben schwenkbar angeordnet ist.

3. Vorrichtung nach Anspruch 1, dadurch gekennzeichnet, daß die Rolle (7) in einem Haltearm in dessen Längsrichtung verschiebbar angeordnet ist.

4. Vorrichtung nach Anspruch 1 oder einem der vorhergehenden, dadurch gekennzeichnet, daß die Rolle (7) und/oder deren Haltearm (8) derart unter der Einwirkung einer Feder (10) steht bzw. stehen, daß diese ihre frei vorragende Normallage einnimmt.

5. Vorrichtung nach Anspruch 1 oder einem der vorhergehenden, dadurch gekennzeichnet, daß der Abstand der äußeren Umfläche der Rolle (7) zu der Führung (3) einstellbar ist.

6. Vorrichtung nach Anspruch 1 oder einem der vorhergehenden, dadurch gekennzeichnet, daß als Rolle (7) eine Schwamm- oder Bürstenrolle Verwendung findet.

7. Vorrichtung nach Anspruch 1 oder einem der vorhergehenden, dadurch gekennzeichnet, daß drei Rollen (7) vorgesehen sind.

8. Vorrichtung nach Anspruch 1 oder einem der vorhergehenden, dadurch gekennzeichnet, daß bei Vorhandensein mehrerer Rollen diese in Förderrichtung gesehen hintereinander angebracht sind.

## Claims

1. Device for guiding together containers (2), preferably bottles, cans or the like, arriving slowly in a wide stream on one or a plurality of one or multi-track endless conveyors (1), along a guide (3) to form a rapidly discharging, pressureless, compact row (5) of containers (2), wherein the guide (3) extends beyond the conveyor(s) (1) and runs in an oblique or arcuate manner relative to the transport direction thereof to the intake area (4) of a conveyor (6) which conveys away the compact row (5) of containers (2), characterised in that one side of the intake area (4) of the conveyor (6) conveying away the compact row (5) of containers (2) is free from the guide; and in that on this guide-free side of the intake area (4) at least one roller (7), exerting a braking effect on the containers (2) coming into contact therewith, is mounted resiliently in such a way that the outer peripheral surface thereof in its normal position extends at least as far as the containers (2) lying against the guide (3) in such a way that a second container (2) cannot pass through the space between the containers (2) lying against the guide and the outer peripheral surface of the roller (7).

2. Device according to Claim 1, characterised in that the roller (7) is rotatably mounted on one end of a retaining arm (8) of which the other end is pivotably disposed in the frame, housing or the like of the device on the side thereof opposite the guide (3).

3. Device according to Claim 1, characterised in that the roller (7) is disposed on a retaining arm so as to be displaceable in the longitudinal direction of the arm.

4. Device according to Claim 1 or any one of the preceding claims, characterised in that the roller (7) and/or the retaining arm (8) thereof is/are subjected to the effect of a spring (10) in such a way that the spring adopts its freely projecting normal position.

5. Device according to Claim 1 or any one of the preceding claims, characterised in that the distance between the outer peripheral surface of the roller (7) and the guide (3) is adjustable.

6. Device according to Claim 1 or any one of the preceding claims, characterised in that a sponge or brush roller is used as the roller (7).

7. Device according to Claim 1 or any one of the preceding claims, characterised in that three rollers (7) are provided.

8. Device according to Claim 1 or any one of the preceding claims, characterised in that when a plurality of rollers is provided they are mounted behind one another viewed in the advance direction.

## Revendications

1. Dispositif pour le regroupement le long d'un dispositif de guidage (3), de récipients (2), de préférence de bouteilles, de boîtes ou analogues, arrivant à faible vitesse, en flux large, sur un ou plusieurs transporteurs (1) continus à une ou plusieurs files, pour former une file continue (5) de récipients (2) qui avancent rapidement, sans pression, le dispositif de guidage (3) s'étendant au-delà du (des) transporteur(s) d'entrée (1), en biais ou en arc de cercle par rapport à la direction de transport de celui-ci ou de ceux-ci, jusque dans la zone d'entrée (4) d'un transporteur (6) qui évacue la file continue de récipients, caractérisé par le fait qu'un côté de la zone d'entrée (4) du transporteur de sortie (6) évacuant la file continue (5) de récipients (2) ne comporte pas de dispositif de guidage et par le fait qu'au moins un galet (7) qui exerce une action de freinage sur les récipients (2) qui viennent en son contact est monté élastiquement sur le côté de la zone d'entrée (4) ne comportant pas de dispositif de guidage de manière telle que la surface périphérique extérieure dudit galet, en position normale de celui-ci, s'étende au moins jusqu'aux récipients (2) appliqués contre le dispositif de guidage (3), afin qu'un deuxième récipient (2) ne puissent pas s'introduire dans l'espace existant entre les récipients (2) appliqués contre le dispositif de guidage et la surface périphérique extérieure du galet (7).

2. Dispositif selon la revendication 1, caractérisé par le fait que le galet (7) est monté tournant à l'une des extrémités d'un bras porteur (8), dont l'autre extrémité est montée avec possibilité de pivotement sur le châssis, la carrosserie ou analogue du dispositif, sur le côté de celui-ci (celle-ci) opposé au dispositif de guidage (3).

3. Dispositif selon la revendication 1, caractérisé par le fait que le galet (7) est monté sur un bras porteur avec possibilité de déplacement en translation dans la direction longitudinale de celui-ci.

4. Dispositif selon la revendication 1 ou l'une des revendications précédentes, caractérisé par le fait que le galet (7) et/ou son bras porteur (8) est/sont soumis à l'action d'un ressort (10) de manière telle que celui-ci/ceux-ci prennent leur position normale, en porte-à-faux.

5. Dispositif selon la revendication 1 ou l'une des revendications précédentes, caractérisé par le fait que la distance entre la surface périphérique extérieure du galet (7) et le dispositif de guidage (3) est réglable.

6. Dispositif selon la revendication 1 ou l'une des revendications précédentes, caractérisé par le fait que l'on utilise comme galet (7) un galet muni d'une éponge ou un galet muni d'une brosse.

7. Dispositif selon la revendication 1 ou l'une des revendications précédentes, caractérisé par le fait qu'il est prévu trois galets (7).

8. Dispositif selon la revendication 1 ou l'une des revendications précédentes, caractérisé par le fait que, lorsqu'il est prévu plusieurs galets, ceux-ci sont placés l'un derrière l'autre vu dans la direction de transport.
